# EUROPEAN PATENT SPECIFICATION

(11) **EP 1 615 463 B1**
(45) Date of publication and mention of the grant of the patent: **07.05.2014**
(21) Application number: 05106131.5
(22) Date of filing: 06.07.2005
(51) Int. Cl.: H04R 3/02

(54) **Adaptive howling canceller**
Adaptive Rückkopplungsunterdrükung
Suppresseur adaptatif de l'effet Larsen

(30) Priority: 09.07.2004 JP 2004202893
(43) Date of publication of application: 11.01.2006
(73) Proprietor: YAMAHA CORPORATION, Hamamatsu-shi Shizuoka-ken (JP)
(72) Inventor: Okumura, Hiraku, Hamamatsu-shi Shizuoka 430-8650 (JP); Fujita, Hiroaki, Hamamatsu-shi Shizuoka 430-8650 (JP)
(74) Representative: Ascherl, Andreas

(56) References cited:
- EP-A1- 0 505 949
- EP-A1- 1 191 813
- EP-A1- 1 429 315
- US-A- 5 428 605

## Description

### BACKGROUND OF THE INVENTION

### [Technical Field]

The present invention is directed to an adaptive howling canceller for use in preventing howling from developing in a sound-reinforcement system installed in auditoria, halls and the like.

### [Related Art]

Hitherto, there are known adaptive howling cancellers for preventing howling from developing by using an adaptive filter (adaptive digital filter). Such a technology is disclosed for example in non-patent document of Inazumi, Imai, and Konishi: "howling prevention in a sound-reinforcement system using the LMS algorithm", Acoustical Society of Japan, proceedings pp. 417-418 (1991, 3).

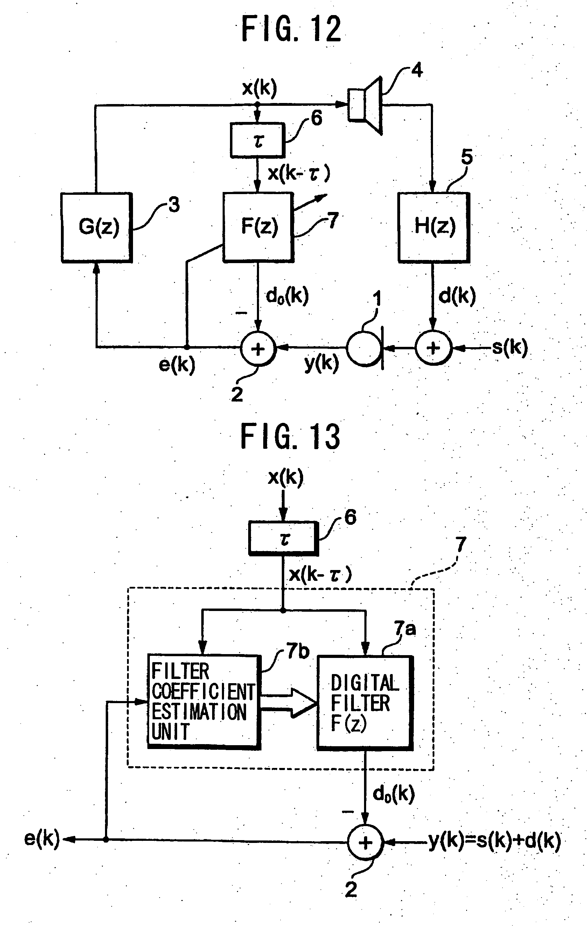

FIG. 12 shows a schematic circuit diagram of a sound-reinforcement system with the type of howling canceller equipped. A microphone 1 and a speaker 4 are placed in a given room. The audio signal input through the microphone 1 is transformed to a signal y(k) in a digital domain through an A/D (analog to digital) conversion process. The y(k) represents a signal at the time kT (where T designates a sampling interval of the audio signal). The signal y(k) is supplied through an adder 2 to an amplifier 3 for amplification. G(z) represents the transfer function of the amplifier 3. The signal x(k) output from the amplifier 3 will be converted to the signal in analog domain by means of a D/A (digital to analog) conversion process, then this electric signal is transformed by the speaker 4 to the acoustic signal.

The acoustic feedback loop 5 is an acoustic path from the speaker 4 to the microphone 1, which has a transfer function H(z). The feedback acoustic signal d(k) fed back through the acoustic feedback loop 5 will be intermixed with the acoustic source signal s(k) composed of the audio signal from the audio source such as a narrator, prior to input into the microphone 1. The microphone 1 will transform the intermixed audio signal from the input to output the electric signal.

The sound-reinforcement system as have been described above may establish a closed loop composed of the path from the microphone 1 through amplifier 3 to speaker 4 then through acoustic feedback loop 5 to microphone 1, resulting in a developed howling due to the increase of the feedback acoustic signal d(k). The adaptive howling canceller has been devised in order to prevent the development of such howling, which includes a delay 6, an adaptive filter 7, and an adder 2.

The delay 6 may output the signal x(k) with a time delay τ in correspondence with the amount of time delay in the acoustic feedback loop 5, and the output signal x (k-τ) will be supplied to the adaptive filter 7. The adaptive filter 7 includes a digital filter 7a and a filter coefficient estimation unit 7b, as shown in FIG. 13, the signal x(k-τ) is input to both of the digital filter 7a and the filter coefficient estimation unit 7b. The digital filter 7a outputs a signal do(k) that simulates the feedback audio signal d(k), in accordance with the transfer function F(z), and the signal do(k) will be subtracted from the signal y(k) by the adder 2. The signal y(k) can be represented by an expression as y(k) = s(k)+d(k). The output signal e(k) of the adder 2 can be represented by an expression as e(k) = y(k)-do(k) = s(k)+Δ(k) (where Δ(k) = d(k)-do(k)). Accordingly, the signal e(k) will be substantially equal to s(k) without the influence of the signal d(k), provided that Δ(k) is sufficiently small, to allow preventing the development of howling. Without the delay 6, the audio source signal s(k) input into the microphone 1 will be input to the adder 2 while also inputting into the adaptive filter 7 with no delay. Since the adaptive filter 7 updates the filter coefficient so as to decrease an error signal e(k), along with the progress of update of the filter coefficient, the audio source signal s(k) in the adder 2 will become canceled by the output signal from the adaptive filter 7. For this reason, the delay 6 is indispensable in order to cancel the feedback audio signal d(k) with the signal do(k) while at the same time preventing the audio source signal s(k) from being canceled.

The filter coefficient estimation unit 7b recurrently updates the filter coefficient of the digital filter 7a so that the transfer function F(z) matches with or approximate to the transfer function H(z) by using the adaptive algorithm and based on the signals x(k-τ) and e(k). The exemplary adaptive algorithm used includes for example LMS (least mean square) algorithm. When the mean square value of the signal e(k)is represented by J = E [e (k)²] (where E[*] indicates an expectation value), the filter coefficient that makes J minimum will be estimated by computation to update the filter coefficient of the digital filter 7a by using thus estimated filter coefficient. As a result of this, a signal that simulates the signal d(k) can be derived for the signal do(k), allowing the howling to be prevented from developing.

In accordance with the prior art described above, when using an adaptive filter 7 which is shorter (has smaller number of taps) as compared with the transfer function H(z), there may arise a problem that the sound quality is severely affected. The inventors of the present invention have conducted an experimental simulation of howling prevention by means of the sound-reinforcement system as shown in FIG. 12.

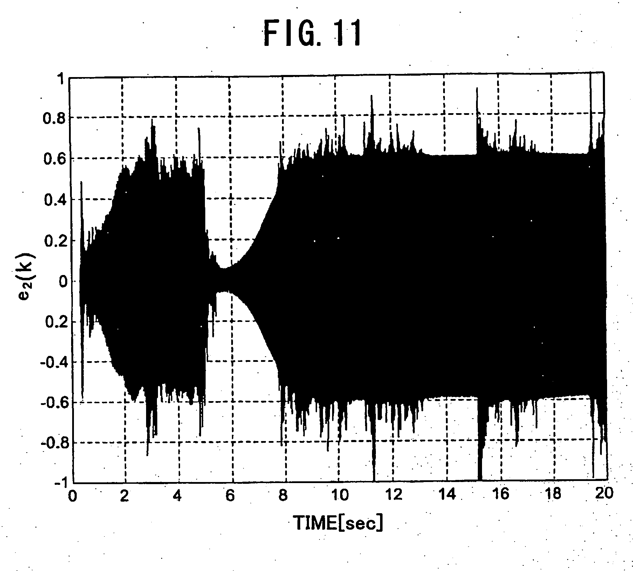

FIG. 11 shows the result of the experimental simulation. In FIG. 11, when e₂(k) in the ordinate is read as e(k), FIG. 11 indicates the change over time of the signal e(k). In the experimentation, the transfer function H(z) has 48,000 taps set, and the adaptive filter 7 has the number of taps of 256, respectively. In FIG. 11, there is no divergence of amplitude, indicating that the howling has been prevented from developing. However, since the adaptive filter 7 simulates only 256 taps of the head part with respect to the transfer function H(z) that has total 48,000 taps, the simulation of the transfer function H(z) is not sufficient so that the signal e(k) has a higher level and the sound quality is significantly affected.

In order to decrease the influence to the sound quality, it is sufficient to approximate the number of taps of the adaptive filter 7 to the entire length of transfer function H(z). However, since LMS algorithm updates the filter coefficient for each sample, the update interval is obviously short (the time to compute a new filter coefficient is short), while the amount of computation per unit time (will be abbreviated as "amount of computation" hereinbelow) required for the update of filter coefficient increases in proportion to the number of taps. Accordingly, in a room where the transfer function H(z) is respectively long (namely, the reverberation time is relatively long) the number of taps is limited by the amount of computation, and the number of taps cannot be increased even if one attempts to increase the number of taps so as to bring it closer to the length of transfer function H(z). Therefore, the sound quality is severely affected and the sound quality is inevitably decreased.

On the other hand, for the adaptive algorithm, there are known algorithms which have a much longer update interval to update the filter coefficient for every tens of thousands samples, such as STFT-CS (Short Time Fourier Transform and Cross Spectrum), and it can be conceivable to update the filter coefficient of the adaptive filter 7 by using one of such algorithms. In such a case, the filter coefficient can be updated with less amount of computation using one of such algorithms. In such a case, the filter coefficient can be updated with less amount of computation even when the number of taps of the adaptive filter is increased, so that the transfer function can be simulated sufficiently for a room which has a long transfer function (i.e., long reverberation time) while at the same time the sound quality can be less affected. However, if the howling develops much quicker than the update period of filter coefficient, the update of filter coefficient is likely to delay when compared to the development of howling, some howling might be developed transitorily.

The patent application EP 1191813 A1 relates to a hearing aid with an adaptive filter for suppression of acoustic feedback in the hearing aid. The hearing aid further comprises a controller that is adapted to compensate for acoustic feedback by determination of a first parameter of an acoustic feedback loop of the hearing aid and adjustment of a second parameter of the hearing aid in response to the first parameter whereby generation of undesired sounds is substantially avoided. Hereby a gain safety margin requirement is significantly reduced.

The patent application EP 1429315 A1 describes a method and system for canceling echoes and noises in environments with variable acoustic conditions and high feedback, such as the interior of an automotive vehicle, permitting audible communication between the occupants, comprising one/several microphone/s for a speech signal and A/D, D/A converters, amplification and filtering means generating an electric signal reproduced as an acoustic signal by a speaker, and an echo canceller using said signal and an electric signal from the microphone integrating the feedback of said signal, another speech signal and noise seized by the microphone, the system being applied to eliminating said feedback, the proposed method and system providing an additional filtering of an electric output signal of the canceling device, after treatment of said signal, comprising a time variant filter that suppresses the residual acoustic echo not cancelled by the system and the noise seized by said microphone/s.

The patent application EP 0505949 A1 relates to a plurality of acoustic transfer functions for a plurality of sets of different positions of a loudspeaker and a microphone in an acoustic system are measured by an acoustic transfer function measuring part. The plurality of measured acoustic transfer functions are used to estimate poles of the acoustic system by a pole estimation part, and a fixed AR filter is provided with the estimated poles as fixed values. A variable MA filter is connected in series to the fixed AR filter and the acoustic transfer function of the acoustic system is simulated by the two filters. The filter coefficients of the variable MA filter are modified with a change in the acoustic transfer function of the acoustic system.

The patent application US 5428605 A1 describes an echo-cancellation with the aid of a number of cascade-connected adaptive filters, wherein each filter forms an output signal for cancelling its respective part of an echo signal appearing on a line included in a four-wire loop. The filters will preferably be able to converge rapidly, at least for relatively short impulse responses, and to provide effective echo-cancellation for different kinds of impulse response. Those filters which are required for the echo cancellation at that moment in time are ascertained by calculating a special quality measurement for each filter. There is formed an echo-reduced signal which is equal to the difference between the original, echo-included signal and the sum of the output signals from those filters that are needed for the echo-cancellation. These filters are updated with the echo-reduced signal, whereas the remainder of the filters are updated with signals formed as the difference between the echo-reduced signals and the output signal of respective filters.

### SUMMARY OF THE INVENTION

The object of the present invention is to provide a novel adaptive howling canceller which allows the howling to be positively prevented from developing in a room with long reverberation time.

A first adaptive howling canceller in accordance with the present invention is provided according to claim 1.

In accordance with the first inventive adaptive howling canceller as set forth above, the first adaptive filter has its update interval of filter coefficient set longer, while the second adaptive filter has its update interval of filter coefficient set shorter. In the first adaptive filter, the number of taps can be in the order of thousands to tens.of thousands, and the update interval of the filter coefficient can be every few thousands to tens of thousands of samples. The adaptive algorithm, which may be suitable to such criteria, includes for example STFT-CS method. The adaptive algorithm of STFT-CS method has less amount of computation required for updating the filter coefficient and higher estimation precision of transfer function if the filter has a large number of taps. In the first adaptive filter, if the transfer function of the acoustic feedback path is longer (reverberation time is longer), a long transfer function can be sufficiently simulated by increasing the number of taps in order to reduce the influence to the sound quality.

In the second adaptive filter, the number of taps can be in the order of tens to hundreds, and the update interval of the filter coefficient can be every each sample to few hundreds samples. The adaptive algorithm suitable to such criteria may include for example LMS algorithm and RLS (Recursive Least Square) algorithm. Since such type of algorithms may update very quickly the filter coefficient, the number of computation increases significantly along with the increase of number of taps of the filter. However, the first inventive adaptive howling canceller has a large number of taps in the first adaptive filter and a less number of taps in the second adaptive filter so that the amount of computation in the second adaptive filter can be suppressed. Accordingly the second adaptive filter has the characteristics in that the response speed to the howling is improved to positively suppress the howling that may develop abruptly in such a case as the transfer function in the acoustic feedback path vary spontaneously.

Accordingly, in accordance with the first inventive adaptive howling canceller, the influence to the sound quality can be minimized while the development of howling can be positively prevented, as well as the amount of computation can be suppressed even in a room with a longer transfer function (longer reverberation time).

A second adaptive howling canceller in accordance with the present invention is provided according to claim 8.

The second inventive adaptive howling canceller as set forth above may comprise three adaptive filters at minimum. In such a case, the second inventive adaptive canceller may be equivalent to a variation of the first inventive adaptive howling canceller described above with an additional set of third adaptive filter and third adder section which is provided in a similar arrangement to the set of the second adaptive filter and the second adder section and which is connected in parallel to the set of the second adaptive filter and the second adder section, and with the update interval of filter coefficient in the third adaptive filter being set smaller than that of second adaptive filter. There can be four or more additional sets of adaptive filter and adder section in a similar manner.

In accordance with the second inventive adaptive howling canceller, a similar effect to the first inventive adaptive howling canceller can be obtained, and practically there is an advantage that facilitates to prevent the howling from developing in an audio facility used in a vast space such as a large hall and the like.

In the first and second inventive adaptive howling cancellers as have been described above, it can be conceivable to add a mixer section that mixes the output signal of the first adaptive filter to the output signal of the delay section to be inputted into the second adaptive filter. In this case, the second adaptive filter can estimate an appropriate filter coefficient based on the output signal of the mixer section and the output signal of the second adder section.

In a preferable form of the first and second inventive adaptive howling cancellers described above, the second adaptive filter resets the second filter coefficient to an initial value when the first adaptive filter updates the first filter coefficient. By such a manner, the reverberation due to past filter coefficients can be suppressed in the second adaptive filter, to thereby improve the estimation precision of the filter coefficient. In this case, the first adaptive filter may estimate a new value of the first filter coefficient for updating the first filter coefficient with reference to the second filter coefficient of the second adaptive filter before the second adaptive filter resets the second filter coefficient. By doing so, the first adaptive filter may estimate an appropriate filter coefficient by taking into account the filter coefficient of the second adaptive filter.

In accordance with the present invention, there are provided, in an adaptive howling canceller, a first adaptive filter having a longer update interval of filter coefficient and a second adaptive filter having a shorter update interval of filter coefficient to suppress in each of adaptive filters the feedback audio signal, so as to obtain an effect that the howling may be positively prevented from developing in a room of long reverberation time while alleviating the degradation of sound quality.

According to another aspect of the present invention, a method according to claim 12 is provided. Advantageous embodiments thereof can be implemented according to any of claims 13-15.

### BRIEF DESCRIPTION OF THE DRAWINGS

FIG. 1 is a schematic circuitry diagram of a sound-reinforcement system incorporating the adaptive howling canceller in accordance with first preferred embodiment of the present invention.
FIG. 2 is a schematic circuitry diagram of a sound-reinforcement system incorporating the adaptive howling canceller in accordance with second preferred embodiment of the present invention.
FIG. 3 is a schematic circuitry diagram of a sound-reinforcement system incorporating the adaptive howling canceller in accordance with third preferred embodiment of the present invention.
FIG. 4 is a schematic circuitry diagram of a sound-reinforcement system used in the experiment for verifying the inventive effect.
FIG. 5 is a waveform diagram illustrative of the change of signal e2(k) over time in the sound-reinforcement system shown in FIG. 4.
FIG. 6 is a schematic circuit diagram of a sound-reinforcement system in accordance with first comparative embodiment.
FIG. 7 is a waveform diagram illustrative of the change of signal e2(k) over time in the sound-reinforcement system shown in FIG. 6.
FIG. 8 is a schematic circuit diagram of a sound-reinforcement system in accordance with second comparative embodiment.
FIG. 9 is a waveform diagram illustrative of the change of signal e2(k) over time in the sound-reinforcement system shown in FIG. 8.
FIG. 10 is a schematic circuit diagram of a sound-reinforcement system in accordance with third comparative embodiment.
FIG. 11 is a waveform diagram illustrative of the change of signal e2(k) over time in the sound-reinforcement system shown in FIG. 10.
FIG. 12 is a schematic circuit diagram of a sound-reinforcement system incorporating a adaptive howling canceller of the prior art.
FIG. 13 is a schematic circuit diagram illustrative of details of the adaptive filter shown in FIG. 12.

### DETAILED DESCRIPTION OF THE INVENTION

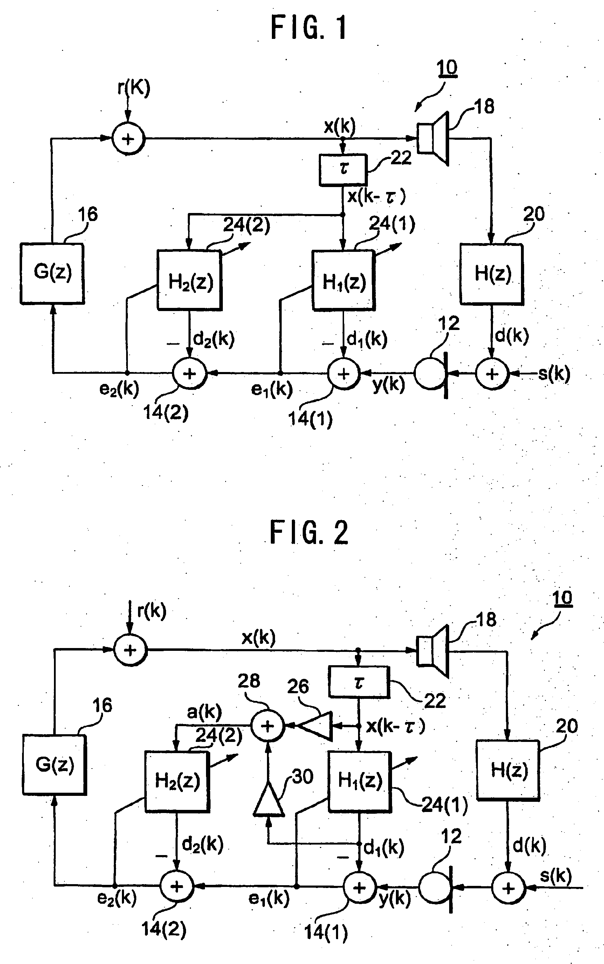

FIG. 1 shows a sound-reinforcement system incorporating the adaptive howling canceller in accordance with a first preferred embodiment of the present invention. In a given space such as an auditorium or a hall, a microphone 12 and a speaker 14 are placed. The audio signal input through the microphone 12 is transformed to signal y(k) in the digital form by an A/D conversion process. The signal y(k) is fed through adder units 14 (1), 14 (2) to an amplifier unit 16 for amplification. The amplifier unit 16 may or may not have a filter function (frequency component change function) in addition to amplification function. G(z) designates to a transfer function of the amplifier unit 16. Signal x(k) output from the amplifier unit 16 is D/A converted to a signal in the analog form, which signal is then transformed by the speaker 18 to the acoustic sound. Here r(k) indicates noise component, and the symbol of adder which receives r(k) indicates that some noise is penetrated.

An acoustic feedback path 20 is an acoustic path from the speaker 18 to the microphone 12, and this path has a transfer function H(z). Feedback audio signal d(k) fed back through the acoustic feedback path 20 will be input into the microphone 12 after mixture with the audio source signal s(k) composed of the audio signal from a source such as a narrator. The microphone 12 will transform the mixed audio signal to an electric signal to output.

The adaptive howling canceller includes a delay unit 22, adaptive filters 24 (1), 24 (2), and adder units 14 (1), 14 (2). The delay unit 22 outputs by adding time delay τ that corresponds to the time delay in the acoustic feedback path 20 to the signal x(k), and its output signal x(k-τ) is fed to the adaptive filter 24 (1), 24 (2), respectively. The adaptive filters 24 (1) and 24 (2) are in the arrangement similar to that described with respect to FIG. 13, which output signals d₁(k), d₂(k) simulating the feedback audio signal d(k) in compliance with their respective transfer functions H₁(z) and H₂(z).

The signal d₁(k) is fed to the adder unit 14 (1) to be subtracted from the input signal y(k). The adder unit 14 (1) outputs signal e₁(k) = y(k)-d₁(k) = s(k)+d(k)-d₁(k), and supplies the output signal e₁(k) to the succeeding adder unit 14 (2) and to the corresponding adaptive filter 24 (1). The signal d₂(k) is fed to the adder unit 14 (2) to be subtracted from the signal e₁(k). The adder unit 14 (2) outputs a signal e₂(k) = e₁(k)- d₂(k) = s(k)+d(k)-di(k)-d₁(k), and supplies this output signal e₂(k) to the corresponding adaptive filter 24 (2) and to the amplifier unit 16. Δk₁₂ = d(k)-d₁(k)-d₂(k) is given, then the signal e₂(k) can be expressed as equation e₂(k) = s(k)+Δk₁₂. When the canceller sufficiently minimizes Δk₁₂, the signal e₂(k) will be substantially equal to s(k) with no influence of signal d(k), to thereby achieve the prevention of howling development.

In the adaptive filter 24 (1), the number of taps should be greater, for example in the order of thousands to tens of thousands; the update interval of the filter coefficient should be longer, for example once for every thousands to tens of thousands of samples. As an adaptive algorithm which meets to this criteria, for example STFT-CS method and the like can be used. By using such an adaptive algorithm and based on signals x(k-τ) and e₁(k), in order to perform the filter coefficient updating at a longer update interval so as for the transfer function H₁(z) to match with or approximate to the transfer function H(z), signal d₁(k) which simulates the signal d(k) can be obtained.

In the adaptive filter 24 (2), the number of taps should be fewer, for example in the order of tens to hundreds; the update interval of the filter coefficient should be shorter, for example once for every each sample to few hundreds samples. As an adaptive algorithm which meets to this criteria, for example LMS algorithm or RLS algorithm may be used. By using such an adaptive algorithm and based on the signal x(k-τ) and e₂(k), in order to perform the filter coefficient updating at a shorter update interval so as for the transfer function H₂(z) to match with or approximate to the transfer function H(z), signal d₂(k) which simulates the signal d(k) can be obtained.

Foregoing Δk₁₂ can be reduced by obtaining signals d₁(k) and d₂(k) as have been described above, to prevent howling from developing. In accordance with the present invention, the adaptive filters 24 (1) and 24 (2) having an update interval of filter coefficient different each from another is used to achieve an adaptive howling canceller that has a better convergence performance (convergence precision and convergence velocity) irrespective of source signal.

Table 1 below indicates the relative response speed to the howling and the amount of computation required for updating the filter coefficient, with respect to the adaptive algorithm which has a longer update interval for use in the adaptive filter 24 (1) such as STFT-CS and the other adaptive algorithm which has a shorter update interval for use in the adaptive filter 24 (2) such as LMS algorithm. O indicates an advantage, and X indicates a disadvantage.

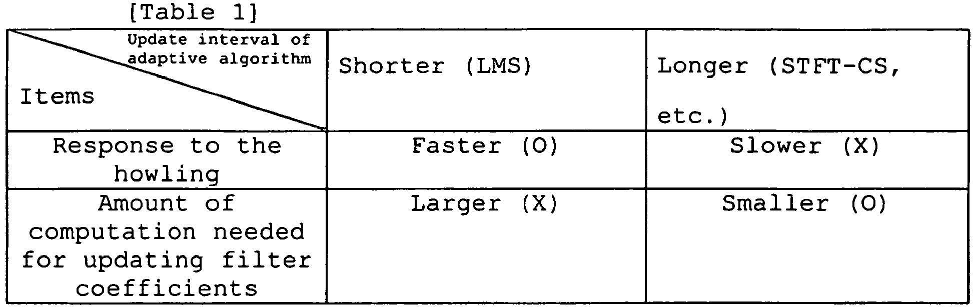

In accordance with Table 1, the adaptive algorithm with a longer update interval has a slower response speed to the howling, however it has an advantage that the amount of computation is smaller for updating the filter coefficient even when the number of taps increases. On the other hand, although the adaptive algorithm with a shorter update interval requires a larger amount of computation for updating the filter coefficient, it has an advantage of faster response speed to the howling.

Table 2 below indicates the orders of the amount of computation required for the update of filter coefficient as a function of the number of taps, N, of the adaptive filter, with respect to the STFT-CS method used as the adaptive algorithm in the adaptive filter 24 (1) as well as the LMS algorithm used as the adaptive algorithm in the adaptive filter 24 (2).

**[Table 2]**

| Filter | Adaptive Algorithm | Order of computation |
|---|---|---|
| 24 (1) | STFT-CS | O (log₂N) |
| 24 (2) | LMS | O(N) |
| | RLS | O (N²) |

From Table 2 above, it can be seen that STFT-CS method shows a slight increase of the amount of computation along with the increase of the number of taps N, while on the other hand LMS algorithm shows an increase of the amount of computation in proportion to the increase of the number of taps N, and the RLS algorithm increases the amount of computation in proportion to a square of the number of taps N.

The present invention uses an adaptive algorithm with a longer update interval for the adaptive filter 24 (1) such as STFT-CS method so that the amount of computation is less even when the number of taps is larger. Because of this, the increased number of taps allows to estimate at a higher precision the transfer function H₁(z) so as to simulate a longer period of the transfer function H(z). This allows also reducing the influence to the sound quality. In addition the amount of computation can be retained minimal.

On the other hand, the adaptive filter 24 (2) uses such an adaptive algorithm as LMS algorithm and the like, which has a shorter interval of update, allowing to keep the response speed to the howling faster and to positively suppress the howling that develops quickly in such a case as the transfer function H(z) abruptly changes. In addition, even when the transfer function H(z) of the room is longer (the reverberation time is longer), the adaptive filter 24 (2) can set a smaller number of taps to save the amount of computation. The total amount of computation of the adaptive filters 24 (1) and 24 (2) will be less than the case in which the filter coefficient of an adaptive filter having the large number of taps is updated by using only LMS algorithm in the circuitry shown in FIG. 12.

It should be noted that the adaptive filter 24 (1) using an adaptive algorithm of longer update interval and the adaptive filter 24 (2) using an adaptive algorithm of shorter update interval are required to connect so as not to deteriorate the estimation precision of the filter coefficients as well as the preventive capability of howling development. The adaptive algorithm is based on an assumption that "it estimates the filter coefficient within a sufficiently shorter period of time than the temporal changes in the time-varying acoustic system to be applied." This implies that the adaptive filter 24 (2), which has a shorter update interval than that of the adaptive filter 24 (1), (i.e., the temporal change of filter coefficient is much faster) should be connected so as not to interfere the system to which the adaptive filter 24 (1) is applied. On the other hand the adaptive filter 24 (1), which has a filter coefficient changing much slower than the adaptive filter 24 (2), may be connected so as to affect the system to which the adaptive filter 24 (2) is applied. By this reason, in the circuitry shown in FIG. 1, the system to which the adaptive filter 24 (2) is applied incorporates the adaptive filter 24 (1) (or, the adaptive filter 24 (2) is avoided to interfere the system to which the adaptive filter 24 (1) is applied).

Although the temporal change of filter coefficient in the adaptive filter 24 (1) is sufficiently slower than the temporal change of filter coefficient in the adaptive filter 24 (2), it is not as small as it can be completely disregarded. It is therefore preferable to introduce a oblivion index into the filter coefficient updating in the adaptive filter 24 (2), or to reset the filter coefficient of the adaptive filter 24 (2) to the initial value (e.g., zero) at the time of filter coefficient updating in the adaptive filter 24 (1) to decrease the influence by the past filter coefficient. Furthermore, when resetting the filter coefficient of the adaptive filter 24 (2) at the time of filter coefficient updating in the adaptive filter 24 (1), the filter coefficient of the adaptive filter 24 (1) may be updated by referring to the filter index of the adaptive filter 24 (2) that is subject to reset, prior to resetting.

FIG. 2 shows a sound-reinforcement system incorporating the adaptive howling canceller in accordance with the second preferred embodiment of the present invention. The similar parts are designated to the identical reference numbers to those in FIG. 1 and the detailed description of the parts already described in the preceding embodiment will be omitted.

The feature of the embodiment shown in FIG. 2 is that the output signal of the delay unit 22 is fed through a buffer 26, that the output signal d₁(k) of the adaptive filter 24 (1) is fed through a buffer 30 to an adder unit 28, and that a mixed signal a(k) = x(k-τ)+d₁(k) is fed as the adder output from the adder unit 28 to the adaptive filter 24 (2). In the adaptive filter 24 (2) the mix signal a(k) is used instead of the signal x(k-τ) shown in FIG. 1 to estimate the filter coefficient based on the mix signal a(k) and the signal e₂(k). The similar effect to the adaptive howling canceller shown in FIG. 1 can be obtained in this configuration.

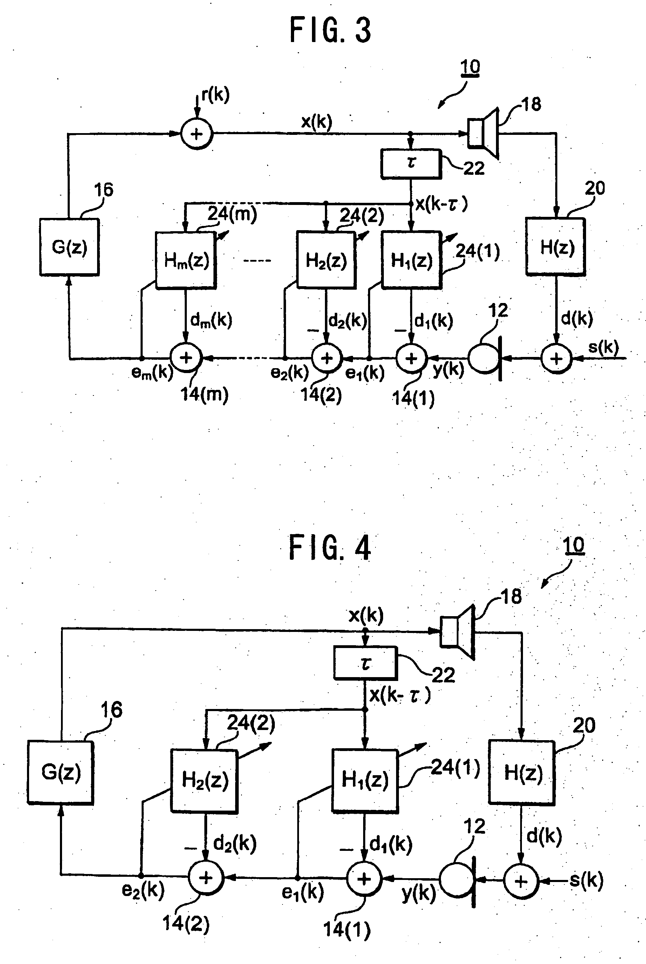

FIG. 3 shows a sound-reinforcement system incorporating the adaptive howling canceller in accordance with the third preferred embodiment of the present invention, and the similar parts are designated to the identical reference numbers to Fig 1 and the detailed description of the parts already described in the preceding embodiments will be omitted.

The feature of the preferred embodiment shown in FIG. 3 is that there are provided first to m-th (where m is an integer equal to or more than 3) adaptive filters 24 (1) - 24 (m) to which the output signal x(k-τ) of the delay unit 22 is supplied respectively, and that first to m-th adder units are connected in series at the output side of the microphone 12. The first to m-th adaptive filters will output signals d₁(k) to dm(k) that simulate the signal d(k) respectively in compliance with their respective transfer function H₁(z) to Hm(z) in order to supply the signals d₁(k) to dm(k) to the respective adder units 14 (1) to 14 (m). The adder unit 14 (1) thus outputs the signal e₁(k) that is made by subtracting the signal d₁(k) from the signal y(k), the adder unit 14 (2) outputs the signal e₂(k) that is made by subtracting the signal d₂(k) from the e₁(k), the adder unit 14 (3) outputs the signal e3(k) that is made by subtracting the signal d3(k) from the signal e₂(k), and so on, such that the adder units 14 (1) to 14 (m) are connected in series, so that the output signals e₁(k) to em(k) of adder units 14 (1) to 14 (m) are respectively fed to the corresponding adaptive filters 24 (1) to 24 (m).

The number of taps and the update interval of the filter coefficient are set such that the number of taps and the update interval of the filter coefficient are gradually decreased from the first adaptive filter 24 (1) to the last adaptive filter 24 (m). As an example, when m = 3, then the number of taps of the adaptive filters 24 (1), 24 (2) and 24 (3) will be set in the order of tens of thousands, few thousands, and tens to hundreds, and the update interval of the filter coefficient of the adaptive filters 24 (1), 24 (2) and 24 (3) will be set to be updated once for every tens of thousands samples, every thousands samples, and one to hundreds samples, respectively.

The circuitry shown in FIG. 3 is an extended form of FIG. 1 with equal to or more than three sets of adaptive filter and adder unit, and the effect similar to that described above with reference to FIG. 1 can be obtained. In addition, incorporating equal to or more than three sets of adaptive filter and adder unit allows to facilitate preventing the howling from developing in the sound-reinforcement system in a large space such as a large auditorium.

In the circuitry of FIG. 3, it is also conceivable that the signal d₁(k) mixed with the signal x(k-τ) is supplied to the adaptive filter 24 (2), instead of the signal x(k-τ), as have been described above in relation to FIG. 2. Furthermore, in the similar manner, the signal dm-1(k) mixed with the signal x(k-τ) may also be supplied to the adaptive filter 24 (m).

As described above, according to the third embodiment of the invention, a plurality of adaptive filters 24 are arranged in three or more numbers in parallel with each other. Each adaptive filter 24 has an input for receiving the output signal fed from the delay section 22 and filtering the output signal of the delay section 22 with a filter coefficient, which is periodically updated at an update interval. The update interval of each adaptive filter 24 is set to decrease successively from the first adaptive filter 24(1) to the last adaptive filter 24(m). A a plurality of adder sections 14 are arranged in correspondence to the plurality of the adaptive filters 24 and are connected in series from a first adder section 14(1) to a last adder section 14(m) between the microphone 12 and the amplifier 16. Each adder section 12 has an input for receiving an output signal fed from the corresponding adaptive filter 24 and subtracting the output signal of the corresponding adaptive filter 24 from an output signal fed from a preceding one of the adder sections to thereby provide an output signal as a result of subtracting to a succeeding one of the adder sections. The output signal from each adder section 14 is inputted into the corresponding adaptive filter 24. The audio signal from the microphone 12 is inputted to the first adder section 14(1), while the output signal from the last adder section 14(m) is inputted through the amplifier 16 to the speaker 18 and to the delay section 22 as the electric signal. The filter coefficient of each adaptive filter 24 is updated by each adaptive filter 24 so as to simulate a transmission function of the acoustic feedback path 20 based on the output signals of the corresponding adder section 14 and the delay section 22.
expediently, the adaptive howling canceller 10 may further comprises a mixer section that mixes the output signal of one adaptive filter to the output signal of the delay section to be inputted into another adaptive filter succeeding to said one adaptive filter. Practically, one adaptive filter resets the filter coefficient thereof to an initial value when another adaptive filter preceding to said one adaptive filter updates the filter coefficient thereof. In such a case, said another adaptive filter estimates a new value of the filter coefficient of said another adaptive filter for updating the filter coefficient of said another adaptive filter with reference to the filter coefficient of said one adaptive filter before said one adaptive filter resets the filter coefficient of said one adaptive filter.

The inventors of the present invention have conducted a experimental simulation in order to confirm the effect of the invention. A sound-reinforcement system of the circuitry configuration as shown in FIG. 4 was used in this experiment. The circuitry shown in FIG. 4 is an identical configuration to that shown in FIG. 1, except that no adder unit is provided for mixing the noise component r(k), and the similar parts are designated to the identical reference numbers and the detailed description of the parts already described will be omitted. In the circuitry of FIG. 4, exemplary conditions of simulation used is set as follows:
- adaptive filter 24 (1)
   number of taps: 16,384
   adaptive algorithm: STFT-CS method
- adaptive filter 24 (2)
   number of taps: 256
   adaptive algorithm: leaky LMS algorithm
- transfer function H(z)
   number of taps: 48,000

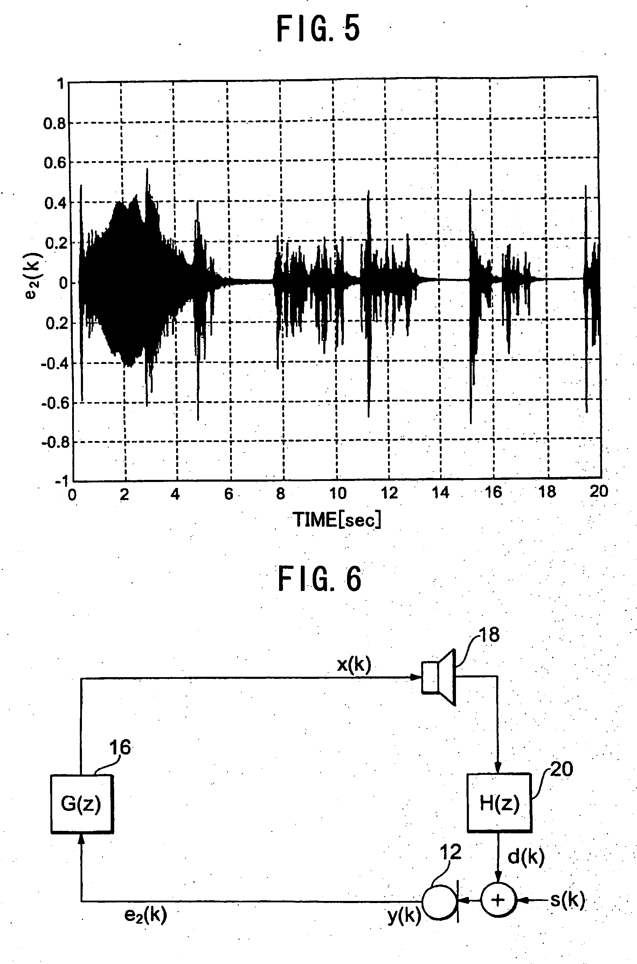

In FIG. 5, the change of the signal e2(k) over time is shown as the result of the experimental simulation conducted by using the circuitry of FIG. 4 under the simulative conditions as above.

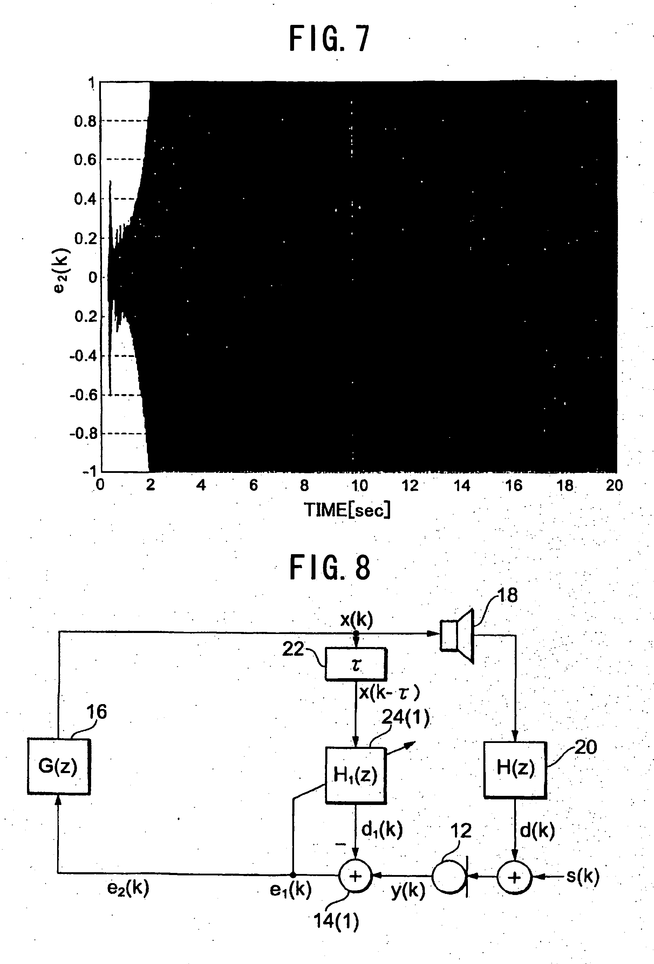

FIG. 6 shows a circuitry configuration of a sound-reinforcement system in accordance with first comparative embodiment. The circuitry shown in FIG. 6 is identical to the circuitry of FIG. 4 except that the adaptive howling canceller is eliminated, and the signal e₂(k) is composed of signal y(k). In FIG. 7, the change of the signal e2(k) over time is shown as the result from the experimental simulation conducted by using the circuitry of FIG. 6 under the simulative conditions described above. It can be seen from FIG. 7 that the signal e₂(k) became divergent immediately prior to the elapsed time of 2 [sec.] to develop a howling.

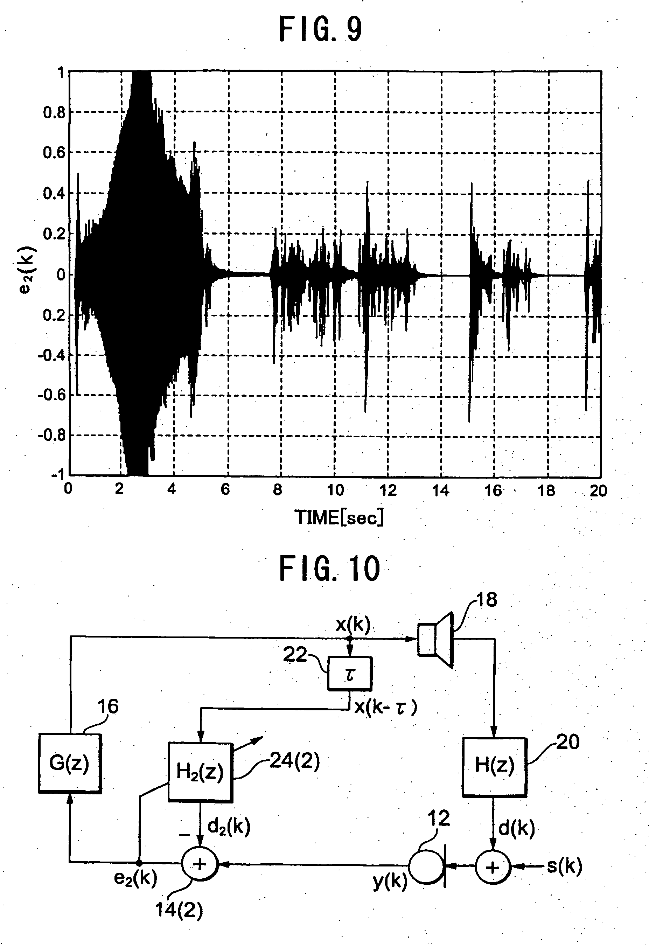

FIG. 8 shows a circuitry arrangement of a sound-reinforcement system in accordance with second comparative embodiment. The circuitry shown in FIG. 8 is identical to the circuitry of FIG. 4, except that the adaptive filter 24 (2) and the adder unit 14 (2) are eliminated, and the signal e₂(k) is composed of signal e₁(k). In FIG. 9, the change of the signal e2(k) over time is shown as the result of the experimental simulation conducted by using the circuitry of FIG. 8 under the simulative conditions described above. It can be seen from FIG. 8 that the signal e₂(k) tends to be divergent before and after the elapsed time of 2 [sec.], however, the divergence is decreased to a lower level, indicating that the development of howling is suppressed, and the signal level is transitorily in excess, suggesting that the potential saturation may occur.

FIG. 10 shows a circuitry arrangement of a sound-reinforcement system in accordance with third comparative embodiment. The circuitry shown in FIG. 10 is identical to the circuitry of FIG. 4, except that the adaptive filter 24 (1) and the adder unit 14 (1) are eliminated, and the adder unit 14 (2) is input with the signal y(k). In FIG. 11, the change of the signal e2(k) over time is shown as the result of the experimental simulation conducted by using the circuitry of FIG. 10 under the simulative conditions described above. It can be seen from FIG. 11 that although the development of howling is suppressed, the level of signal e₂(k) is somewhat elevated, indicating that the sound quality is significantly affected.

When comparing FIG. 5 with FIGS. 9 and 11, it can be seen in FIG. 5 in accordance with the present invention the level of the signal e₂(k) is relatively lowered around the elapsed time of 2 [sec.], and decreased further thereafter. Therefore, in accordance with the present invention, the howling can be positively prevented from developing while allowing much less influence to the sound quality.

## Claims

1. An adaptive howling canceller
the adaptive howling canceller being adapted for use in a sound-reinforcement system which system includes
a microphone (12) installed in a given space for collecting therefrom an audio signal,
a speaker (18) installed in the space such that an acoustic feedback path (20) is formed from the speaker (18) to the microphone (12), and
an amplifier (16) connected between an output of the microphone (12) and an input of the speaker (18) for amplifying the audio signal fed from the microphone (12) to provide an electric signal (x(k)) to the speaker (18),
wherein the adaptive howling canceller is adapted for suppressing a feedback component of the audio signal fed back from the speaker (18) to the microphone (12) through the acoustic feedback path (20) with a given time delay,
the adaptive howling canceller comprising:
a delay section (22) that is adapted to add a time delay corresponding to the time delay of the acoustic feedback path (20) to the electric signal which (x(k)) is provided from the amplifier (16) to thereby output the electric signal added with the time delay as an output signal (x(k-τ));
a first adaptive filter (24(1)) that has an input for receiving the output signal (x(k-τ)) fed from the delay section (22) and that is adapted to filter the output signal (x(k-τ)) of the delay section (22) with a first filter coefficient, which is periodically updated at an update interval;
a second adaptive filter (24(2)) that has an input for receiving the output signal (x(k-τ)) fed from the delay section (22) and that is adapted to filter the output signal (x(k-τ)) of the delay section (22) with a second filter coefficient, which is periodically updated at another update interval set shorter than the update interval of the first filter coefficient;
a first adder section (14(1)) that has an input for receiving an output signal (d₁(k)) fed from the first adaptive filter (29(1)), and that is adapted to subtract the output signal(d₁(k)) of the first adaptive filter (24(1)) from the audio signal (y(k)) fed from the microphone (12) to thereby provide an output signal (e₁(k)) as a result of subtracting; and
a second adder section (14(2)) that has an input for receiving an output signal (d₂(k)) fed from the second adaptive filter (24(2)), and that is adapted to subtract the output signal (d₂(k)) of the second adaptive filter (24(2)) from the output signal (e₁(k)) of the first adder section (14(1)) to thereby provide an output signal (e₂(k)) as a result of subtracting,
wherein the howling canceller is adapted to allow for the output signal (e₁(k)) from the first adder section (14(1) to be inputted into the first adaptive filter (24(1)), and the output signal (e₂(k)) from the second adder section (14(2)) to be inputted into the second adaptive filter (24(2)),
, and
wherein the first adaptive filter (24(1)) is adapted to update the first filter coefficient so as to simulate a transfer function (H(z)) of the acoustic feedback path (20) based on the output signals (e₁(k), x(k-τ)) of the first adder section (14(1)) and the delay section (22), and the second adaptive filter (24(2)) is adapted to update the second filter coefficient so as to simulate the transfer function (H(z)) of the acoustic feedback path (20) based on the output signals (e₂(k), x(k-τ)) of the second adder section (14(2)) and the delay section (22)
**characterized in that** the howling canceller is further adapted to allow for the output signal (e₂(k)) from the second adder section (14(2)) to be inputted through the amplifier (16) to the speaker (18) and to the delay section (22) as the electric signal (x(k)).

2. The adaptive howling canceller in accordance with claim 1, further comprising a mixer section adapted to mix the output signal (d₁(k)) of the first adaptive filter (24(1)) to the output signal (x(k-τ)) of the delay section (22) to be inputted into the second adaptive filter (24(2)).

3. The adaptive howling canceller in accordance with claim 2, wherein the second adaptive filter (24(2)) is adapted to reset the second filter coefficient to an initial value when the first adaptive filter (24(1)) updates the first filter coefficient.

4. The adaptive howling canceller in accordance with claim 3, wherein the first adaptive filter (24(1)) is adapted to estimate a new value of the first filter coefficient for updating the first filter coefficient with reference to the second filter coefficient of the second adaptive filter (24(2)) before the second adaptive filter (24(2)) resets the second filter coefficient.

5. The adaptive howling canceller in accordance with claim 1, wherein the first adaptive filter (24(1)) has a first number of taps for filtering the output signal (x(k-τ)) of the delay section, and the second adaptive filter (24(2)) has a second number of taps for filtering the output signal of the delay section (x(k-τ)), the first number being set greater than the second number.

6. The adaptive howling canceller in accordance with claim 5, wherein the first adaptive filter (24(1) is adapted to use a Short Time Fourier Transform and Cross Spectrum algorithm (STFT-CS algorithm) for updating the first filter coefficient.

7. The adaptive howling canceller in accordance with claim 5, wherein the second adaptive filter (24(2)) is adapted to use a least mean square algorithm (LMS algorithm) or a Recursive Least Square algorithm (RLS algorithm) for updating the second filter coefficient.

8. An adaptive howling canceller
the adaptive howling canceller being adapted for use in a sound-reinforcement system which system includes
a microphone (12) installed in a given space for collecting therefrom an audio signal,
a speaker (18) installed in the space such that an acoustic feedback path (20) is formed from the speaker (18) to the microphone (12), and
an amplifier (16) connected between an output of the microphone (12) and an input of the speaker (18) for amplifying the audio signal fed from the microphone (12) to provide an electric signal to the speaker (18),
wherein the adaptive howling canceller is adapted for suppressing a feedback component of the audio signal fed back from the speaker (18) to the microphone (12) through the acoustic feedback path (20) with a given time delay,
the adaptive howling canceller comprising:
a delay section (22) that is adapted for adding a time delay corresponding to the time delay of the acoustic feedback path (20) to the electric signal (x(k)) which is provided from the amplifier (16) to thereby output the electric signal added with the time delay as an output signal (x(k-τ));
at least three adaptive filters (24(1), 24(2), 24(m)) that are arranged in parallel with each other, each adaptive filter (24(1), 24(2), 24(m)) having an input for receiving the output signal (x(k-τ)) fed from the delay section (22) and being adapted for filtering the output signal of the delay section (22) with a filter coefficient, which is periodically updated at an update interval, the update interval of each adaptive filter (24(1), 24(2), 24(m)) being set to decrease successively from a first one of the adaptive filters (24(1), 24(2), 24(m)) to a last one of the adaptive filters (24(1), 24(2), 24(m)); and
a plurality of adder sections (14(1), 14(2), 14(m)) that are arranged in correspondence to the adaptive filters (24(1), 24(2), 24(m)) and are connected in series from a first one (14(1)) of the adder sections (14(1), 14(2), 14(m)) to a last one (14(m)) of the adder sections (14(1), 14(2), 14(m)) between the microphone (12) and the amplifier (16), each adder section (14(1), 14(2), 14(m)) having an input for receiving an output signal (d₁(k), d₂(k), dₘ(k)) fed from the corresponding adaptive filter (24(1), 24(2), 24(m)),
wherein the first one (14(1)) of the adder sections (14(1), 14(2), 14(m)) is adapted to subtract the output signal(d₁(k)) of the first adaptive filter (24(1)) from the audio signal (y(k)) fed from the microphone (12) to thereby provide an output signal (e₁(k)) as a result of subtracting and
the other adder sections (14(2), 14(m)) are adapted for subtracting the output signal (d₂(k), dₘ(k)) of the corresponding adaptive filter (24(2), 24(m)) from an output signal(e₁(k), e₂(k)) fed from a preceding one of the adder sections (14(1), 14(2), 14(m)) to thereby provide an output signal (d₂(k), dₘ(k)) as a result of subtracting ,
wherein the howling canceller is adapted to allow for the output signal (e₁(k), e₂(k), em(k)) from each adder section (14(1), 14(2), 14(m)) to be inputted into the corresponding adaptive filter (24(1), 24(2), 24(m)), and
wherein each adaptive filter (24(1), 24(2), 24(m))is adapted to update each respective filter coefficient so as to simulate a transfer function (H(z)) of the acoustic feedback path (20) based on the output signals (e₁(k), e₂(k), eₘ(k)) of the corresponding adder section (14(1), 14(2), 14(m)) and the delay section (22)
**characterized in that** the howling canceller is further adapted to allow for the output signal (eₘ(k)) from the last one (14(m)) of the adder sections (14(1), 14(2), 14(m)) to be inputted through the amplifier (16) to the speaker (18) and to the delay section (2) as the electric signal (x(k)).

9. The adaptive howling canceller in accordance with claim 8, further comprising a mixer section that is adapted to mix the output signal (d₁(k), d₂(k)) of one adaptive filter (24(1), 24(2)) to the output signal (x(k-τ)) of the delay section (22) to be inputted into another adaptive filter (24(2), 24(m)) succeeding to said one adaptive filter (24(1), 24(2)).

10. The adaptive howling canceller in accordance with claim 8, wherein one adaptive filter (24(2), 24(m)) is adapted to reset the filter coefficient thereof to an initial value when another adaptive filter (24(1), 24(2)) preceding to said one adaptive filter (24(2), 24(m)) updates the filter coefficient thereof.

11. The adaptive howling canceller in accordance with claim 10, wherein said other adaptive filter (24(1), 24(2)) is adapted to estimate a new value of the filter coefficient of said other adaptive filter (24(1), 24(2)) for updating the filter coefficient of said other adaptive filter (24(1), 24(2)) with reference to the filter coefficient of said one adaptive filter (24(2), 24(m)) before said one adaptive filter (24(2), 24(m)) resets the filter coefficient of said one adaptive filter (24(2), 24(m)).

12. A method for adaptively cancelling howling in a sound-reinforcement system, which system includes
a microphone (12) installed in a given space for collecting therefrom an audio signal,
a speaker (18) installed in the space such that an acoustic feedback path (20) is formed from the speaker (18) to the microphone (12), and
an amplifier (16) connected between an output of the microphone (12) and an input of the speaker (18) for amplifying the audio signal (y(k)) fed from the microphone (12) to provide an electric signal (x(k) to the speaker (14),
wherein a feedback component of the audio signal fed back from the speaker (18) to the microphone (12) through the acoustic feedback path (20) with a given time delay is suppressed,
wherein said method comprises
adding a time delay corresponding to the time delay of the acoustic feedback path (20) to the electric signal (x(k)) which is provided from the amplifier (16);
feeding the electric signal (x(k-τ)) added with the time delay to a plurality of adaptive filters (24(1), 24(2), 24(m)) that are arranged in parallel with each other,
filtering the electric signal (x(k-τ)) added with the time delay with a filter coefficient, which is periodically updated at an update interval, the update interval of each adaptive filter (24(1), 24(2), 24(m)) being set to decrease successively from a first one (24(1)) of the adaptive filters (24(1), 24(2), 24(m)) to a last one (24(m)) of the adaptive filters (24(1), 24(2), 24(m));
feeding to a plurality of adder sections (14(1), 14(2), 14(m)) that are arranged in correspondence to the plurality of the adaptive filters (24(1), 24(2), 24(m)) and are connected in series from a first one (14(1)) of the adder sections (14(1), 14(2), 14(m)) to a last one of the adder sections (14(1), 14(2), 14(m)) between the microphone (12) and the amplifier (16) an output signal (d₁(k), d₁(k), d₁(k)) from the corresponding adaptive filter (24(1), 24(2), 24(m)),
providing an output signal (e₂(k)) of the first adder section (14(1) by subtracting the output signal (d₁(k)) of the first adaptive filter (24(1) from the output signal (y(k)) from the microphone (12),
providing an output signal (d₂(k), dₘ(k)) of the other adder sections (14(2), 14(m)) by subtracting the output signal (d₂(k), dₘ(k)) of the corresponding adaptive filter (24(2), 24(m)) from an output signal (e₁(k), e₂(k)) fed from a respective preceding one (14(1), 14(2)) of the adder sections (14(1), 14(2), 14(m)) to thereby provide an output signal (e₂(k), eₘ(k)),
wherein the output signal (e₁(k), e₂(k), eₘ(k)) from each adder section (14(1), 14(2), 14(m)) is inputted into the corresponding adaptive filter (24(1), 24(2), 24(m)), and
wherein the filter coefficient of each adaptive filter (24(1), 24(2), 24(m)) is updated by each adaptive filter(29(1), 24(2), 24(m)) so as to simulate a transfer function (H(z)) of the acoustic feedback path (20) based on the output signals (e₁(k), e₂(k), eₘ(k)) of the corresponding adder section (14(1), 14(2), 14(m)) and the electric signal (x(k-i)) added with the time delay,
**characterized in that** the output signal (eₘ(k)) from the last one (14(m)) of the adder sections(14(1), 14(2), 14(m)) is inputted through the amplifier (16) to the speaker (18) and subjected, as the electric signal (x(k)), to said adding of the time delay.

13. The method in accordance with claim 12, wherein the output signal (d₁(k), d₂(k)) of one adaptive filter (24(1), 24(2)) is mixed to said electric signal (x(k-τ)) added with the time delay to be inputted into another adaptive filter (24(2), 24(m)) succeeding to said one adaptive filter (24(1), 24(2)).

14. The method in accordance with claim 12, wherein the filter coefficient of one adaptive filter (24(2), 24(m)) is reset to an initial value when the filter coefficient of another adaptive filter (24(1), 24(2)) preceding to said one adaptive filter (24(2), 24(m)) is updated.

15. The method in accordance with claim 14, wherein a new value of the filter coefficient of said other adaptive filter (24(1), 24(2)) is estimated for updating the filter coefficient of said other adaptive filter (24(1), 24(2)) with reference to the filter coefficient of said one adaptive filter (24(2), 24(m)) before the filter coefficient of said one adaptive filter (24(2), 24(m)) is reset.

## Patentansprüche

1. Adaptive Rückkopplungsunterdrückungseinrichtung,
wobei die adaptive Rückkopplungsunterdrückungseinrichtung zur Verwendung in einem Klangverstärkungssystem ausgelegt ist, wobei das System aufweist:
ein Mikrofon (12), das in einem vorgegebenen Raum installiert ist, um von diesem ein Audiosignal aufzunehmen,
einen Lautsprecher (18), der in dem Raum installiert ist, so dass ein akustischer Rückkoppelungspfad (20) von dem Lautsprecher (18) zum Mikrofon (12) ausgebildet wird, und
einen Verstärker (16), der zwischen einen Ausgang des Mikrofons (12) und einen Eingang des Lautsprechers (18) geschaltet ist, um das von dem Mikrofon (12) gelieferte Audiosignal zu verstärken, um dem Lautsprecher (18) ein elektrisches Signal (x(k)) bereitzustellen,
wobei die adaptive Rückkopplungsunterdrückungseinrichtung zum Unterdrücken einer Rückkopplungskomponente des von dem Lautsprecher (18) über den akustischen Rückkopplungspfad (20) mit einer vorbestimmten Zeitverzögerung an das Mikrofon (12) rückgekoppelten Audiosignals ausgelegt ist,
wobei die adaptive Rückkopplungsunterdrückungseinrichtung aufweist:
einen Verzögerungsabschnitt (22), der dazu ausgelegt ist, eine Zeitverzögerung, die der Zeitverzögerung des akustischen Rückkopplungspfads (20) entspricht, zu dem elektrischen Signal (x(k)) hinzuzuaddieren, das von dem Verstärker (16) bereitgestellt wird, um dadurch das elektrische Signal, dem die Zeitverzögerung hinzuaddiert wurde, als ein Ausgangssignal (x(k-τ)) auszugeben;
ein erstes adaptives Filter (24(1)), das einen Eingang hat zum Empfangen des Ausgangssignals (x(k-τ)), das von dem Verzögerungsabschnitt (22) geliefert wird, und das dazu ausgelegt ist, das Ausgangssignal (x(k-τ)) des Verzögerungsabschnitts (22) mit einem ersten Filterkoeffizienten zu filtern, der mit einem Aktualisierungsintervall periodisch aktualisiert wird;
ein zweites adaptives Filter (24(2)), das einen Eingang hat zum Empfangen des Ausgangssignals (x(k-τ)), das von dem Verzögerungsabschnitt (22) geliefert wird, und das dazu ausgelegt ist, das Ausgangssignal (x(k-τ)) des Verzögerungsabschnitts (22) mit einem zweiten Filterkoeffizienten zu filtern, der mit einem anderen Aktualisierungsintervall periodisch aktualisiert wird, das kürzer als das Aktualisierungsintervall des ersten Filterkoeffizienten gesetzt ist;
einen ersten Addiererabschnitt (14(1)), der einen Eingang hat zum Empfangen eines Ausgangssignals (d₁(k)), das von dem ersten adaptiven Filter (24(1)) geliefert wird, und der dazu ausgelegt ist, das Ausgangssignal (d₁(k)) des ersten adaptiven Filters (24(1)) von dem Audiosignal (y(k)), das von dem Mikrofon (12) geliefert wird, abzuziehen, um dadurch ein Ausgangssignal (e₁(k)) als Ergebnis einer Subtraktion bereitzustellen; und
einen zweiten Addiererabschnitt (14(2)), der einen Eingang hat zum Empfangen eines Ausgangssignals (d₂(k)), das von dem zweiten adaptiven Filter (24(1)) geliefert wird, und der dazu ausgelegt ist, das Ausgangssignal (d₂(k)) des zweiten adaptiven Filters (24(2)) von dem Ausgangssignal (e₁(k)) des ersten Addiererabschnitts (14(1)) abzuziehen, um dadurch ein Ausgangssignal (e₂(k)) als Ergebnis einer Subtraktion bereitzustellen,
wobei die Rückkopplungsunterdrückungseinrichtung dazu ausgelegt ist zu ermöglichen, dass das Ausgangssignal (e₁(k)) des ersten Addiererabschnitts (14(1)) in das erste adaptive Filter (24(1)) eingegeben wird und das Ausgangssignal (e₂(k)) des zweiten Addiererabschnitts (14(2)) in das zweite adaptive Filter (24(2)) eingegeben wird,
und
wobei das erste adaptive Filter (24(1)) dazu ausgelegt ist, den ersten Filterkoeffizienten zu aktualisieren, um so eine Transferfunktion (H(z)) des akustischen Rückkopplungspfads (20) auf der Grundlage der Ausgangssignale (e₁(k), x(k-τ)) des ersten Addiererabschnitts (14(1)) und des Verzögerungsabschnitts (22) zu simulieren, und das zweite adaptive Filter (24(2)) dazu ausgelegt ist, den zweiten Filterkoeffizienten zu aktualisieren, um so die Transferfunktion (H(z)) des akustischen Rückkopplungspfads (20) auf der Grundlage der Ausgangssignale (e₂(k), x(k-τ)) des zweiten Addiererabschnitts (14(2)) und des Verzögerungsabschnitts (22) zu simulieren,
**dadurch gekennzeichnet, dass** die Rückkopplungsunterdrückungseinrichtung ferner dazu ausgelegt ist zu ermöglichen, dass das Ausgangssignal (e₂(k)) des zweiten Addiererabschnitts (14(2)) über den Verstärker (16) in den Lautsprecher (18) und in den Verzögerungsabschnitt (22) als das elektrische Signal (x(k)) eingegeben wird.

2. Adaptive Rückkopplungsunterdrückungseinrichtung gemäß Anspruch 1, ferner aufweisend einen Mischerabschnitt, der dazu ausgelegt ist, das Ausgangssignal (d₁(k)) des ersten adaptiven Filters (24(1)) mit dem Ausgangssignal (x(k-τ)) des Verzögerungsabschnitts (22) zur Eingabe in das zweite adaptive Filter (24(2)) zu mischen.

3. Adaptive Rückkopplungsunterdrückungseinrichtung gemäß Anspruch 2, wobei das zweite adaptive Filter (24(2)) dazu ausgelegt ist, den zweiten Filterkoeffizienten auf einen Anfangswert rückzusetzen, wenn das erste adaptive Filter (24(1)) den ersten Filterkoeffizienten aktualisiert.

4. Adaptive Rückkopplungsunterdrückungseinrichtung gemäß Anspruch 3, wobei das erste adaptive Filter (24(1)) dazu ausgelegt ist, einen neuen Wert des ersten Filterkoeffizienten zur Aktualisierung des ersten Filterkoeffizienten mit Bezug auf den zweiten Filterkoeffizienten des zweiten adaptiven Filters (24(2)) zu schätzen, bevor das zweite adaptive Filter (24(2)) den zweiten Filterkoeffizienten rücksetzt.

5. Adaptive Rückkopplungsunterdrückungseinrichtung gemäß Anspruch 1, wobei das erste adaptive Filter (24(1)) eine erste Anzahl von Zapfanschlüssen zum Filtern des Ausgangssignals (x(k-τ)) des Verzögerungsabschnitts hat und das zweite adaptive Filter (24(2)) eine zweite Anzahl von Zapfanschlüssen zum Filtern des Ausgangssignals des Verzögerungsabschnitts (x(k-τ)) hat, wobei die erste Anzahl größer als die zweite Anzahl gesetzt ist.

6. Adaptive Rückkopplungsunterdrückungseinrichtung gemäß Anspruch 5, wobei das erste adaptive Filter (24(1)) dazu ausgelegt ist, einen STFT-CS-Algorithmus (Short Time Fourier Transform and Cross Spectrum) zum Aktualisieren des ersten Filterkoeffizienten zu verwenden.

7. Adaptive Rückkopplungsunterdrückungseinrichtung gemäß Anspruch 5, wobei das zweite adaptive Filter (24(2)) dazu ausgelegt ist, einen LMS-Algorithmus (Least Mean Square) oder einen RLS-Algorithmus (Recursive Least Square) zur Aktualisierung des Filterkoeffizienten zu verwenden.

8. Adaptive Rückkopplungsunterdrückungseinrichtung,
wobei die adaptive Rückkopplungsunterdrückungseinrichtung zur Verwendung in einem Klangverstärkungssystem ausgelegt ist, wobei das System aufweist:
ein Mikrofon (12), das in einem vorgegebenen Raum installiert ist, um von diesem ein Audiosignal aufzunehmen,
einen Lautsprecher (18), der in dem Raum installiert ist, so dass ein akustischer Rückkoppelungspfad (20) von dem Lautsprecher (18) zum Mikrofon (12) ausgebildet wird, und
einen Verstärker (16), der zwischen einen Ausgang des Mikrofons (12) und einen Eingang des Lautsprechers (18) geschaltet ist, um das von dem Mikrofon (12) gelieferte Audiosignal zu verstärken, um dem Lautsprecher (18) ein elektrisches Signal (x(k)) bereitzustellen,
wobei die adaptive Rückkopplungsunterdrückungseinrichtung zum Unterdrücken einer Rückkopplungskomponente des von dem Lautsprecher (18) über den akustischen Rückkopplungspfad (20) mit einer vorbestimmten Zeitverzögerung an das Mikrofon (12) rückgekoppelten Audiosignals ausgelegt ist,
wobei die adaptive Rückkopplungsunterdrückungseinrichtung aufweist:
einen Verzögerungsabschnitt (22), der dazu ausgelegt ist, eine Zeitverzögerung, die der Zeitverzögerung des akustischen Rückkopplungspfads (20) entspricht, dem elektrischen Signal (x(k)) hinzuzuaddieren, das von dem Verstärker (16) bereitgestellt wird, um dadurch das elektrische Signal, dem die Zeitverzögerung hinzuaddiert wurde, als ein Ausgangssignal (x(k-τ)) auszugeben;
mindestens drei adaptive Filter (24(1), 24(2), 24(m)), die parallel zueinander geschaltet sind, wobei jedes adaptive Filter (24(1), 24(2), 24(m)) einen Eingang zum Empfangen des Ausgangssignals (x(k-T)) hat, das von dem Verzögerungsabschnitt (22) geliefert wird, und das dazu ausgelegt ist, das Ausgangssignal des Verzögerungsabschnitts (22) mit einem Filterkoeffizienten zu filtern, der mit einem Aktualisierungsintervall periodisch aktualisiert wird, wobei das Aktualisierungsintervall eines jeden adaptiven Filters (24(1), 24(2), 24(m)) so gesetzt ist, dass es von dem ersten der adaptiven Filter (24(1), 24(2), 24(m)) zum letzten der adaptiven Filter (24(1), 24(2), 24(m)) nacheinander abnimmt; und
mehrere Addiererabschnitte (14(1), 14(2), 14(m)), die in Entsprechung zu den adaptiven Filtern (24(1), 24(2), 24(m)) angeordnet sind und von einem ersten (14(1)) der Addiererabschnitte (14(1), 14(2), 14(m)) zu einem letzten (14(m)) der Addiererabschnitte (14(1), 14(2), 14(m)) zwischen das Mikrofon (12) und den Verstärker (16) geschaltet sind, wobei jeder Addiererabschnitt (14(1), 14(2), 14(m)) einen Eingang zum Empfangen eines Ausgangssignals (d₁(k), d₂(k), dₘ(k)), das von dem entsprechenden adaptiven Filter (24(1), 24(2), 24(m)) geliefert wird, aufweist,
wobei der erste (14(1)) der Addiererabschnitte (14(1), 14(2), 14(m)) dazu ausgelegt ist, das Ausgangssignal (d₁(k)) des ersten adaptiven Filters (24(1)) von dem Audiosignal (y(k)), das von dem Mikrofon (12) geliefert wird, abzuziehen, um dadurch ein Ausgangssignal (e₁(k)) als Ergebnis einer Subtraktion bereitzustellen, und
die anderen Addiererabschnitte (14(2), 14(m)) dazu ausgelegt sind, die Ausgangssignale (d₂(k), dₘ(k)) des entsprechenden adaptiven Filters (24(2), 24(m)) von einem Ausgangssignal (e₁(k), e₂(k), das von einem Vorhergehenden der Addiererabschnitte (14(1), 14(2), 14(m)) geliefert wird, abzuziehen, um dadurch ein Ausgangssignal (d₂(k), dₘ(k)) als ein Ergebnis einer Subtraktion bereitzustellen,
wobei die Rückkopplungsunterdrückungseinrichtung dazu ausgelegt ist zu ermöglichen, dass das Ausgangssignal (e₁(k), e₂(k), eₘ(k)) von dem jeweiligen Addiererabschnitt (14(1), 14(2), 14(m)) in das entsprechende adaptive Filter (24(1), 24(2), 24(m)) eingegeben wird, und
wobei jedes adaptive Filter (24(1), 24(2), 24(m)) dazu ausgelegt ist, jeden entsprechenden Filterkoeffizienten zu aktualisieren, um so eine Transferfunktion (H(z)) des akustischen Rückkopplungspfads (20) auf der Grundlage der Ausgangssignale (e₁(k), e₂(k), eₘ(k)) des entsprechenden Addiererabschnitts (14(1), 14(2), 14(m)) und des Verzögerungsabschnitts (22) zu simulieren,
**dadurch gekennzeichnet, dass** die Rückkopplungsunterdrückungseinrichtung ferner dazu ausgelegt ist zu ermöglichen, dass das Ausgangssignal (eₘ(k)) des letzten (14(m)) der Addiererabschnitte (14(1), 14(2), 14(m)) über den Verstärker (16) in den Lautsprecher (18) und in den Verzögerungsabschnitt (22) als das elektrische Signal (x(k)) eingegeben wird.

9. Adaptive Rückkopplungsunterdrückungseinrichtung gemäß Anspruch 8, ferner aufweisend einen Mischerabschnitt, der dazu ausgelegt ist, das Ausgangssignal (d₁(k), d₂(k)) eines adaptiven Filters (24(1), 24(2)) mit dem Ausgangssignal (x(k-τ)) des Verzögerungsabschnitts (22) zur Eingabe in ein anderes adaptives Filter (24(2), 24(m)), das auf das eine adaptive Filter (14(1), 24(2)) folgt, zu mischen.

10. Adaptive Rückkopplungsunterdrückungseinrichtung gemäß Anspruch 8, wobei ein adaptives Filter (24(2), 24(m)) dazu ausgelegt ist, seinen Filterkoeffizienten auf einen Anfangswert rückzusetzen, wenn ein anderes adaptives Filter (24(1), 24(2)), das dem einen adaptiven Filter (24(2), 24(m)) vorausgeht, seinen Filterkoeffizienten aktualisiert.

11. Adaptive Rückkopplungsunterdrückungseinrichtung gemäß Anspruch 10, wobei das andere adaptive Filter (24(1), 24(2)) dazu ausgelegt ist, einen neuen Wert des Filterkoeffizienten des anderen adaptiven Filters (24(1), 24(2)) zur Aktualisierung des Filterkoeffizienten des anderen adaptiven Filters (24(1), 24(2)) mit Bezug auf den Filterkoeffizienten des einen adaptiven Filters (24(2), 24(m)) zu schätzen, bevor das eine adaptive Filter (24(2), (24(m)) den Filterkoeffizienten des einen adaptiven Filters (24(2), 24(m)) rücksetzt.

12. Verfahren zum adaptiven Unterdrücken einer Rückkopplung in einem Klangverstärkungssystem, wobei das System aufweist:
ein Mikrofon (12), das in einem vorgegebenen Raum installiert ist, um von diesem ein Audiosignal aufzunehmen,
einen Lautsprecher (18), der in dem Raum installiert ist, so dass ein akustischer Rückkoppelungspfad (20) von dem Lautsprecher (18) zum Mikrofon (12) ausgebildet wird, und
einen Verstärker (16), der zwischen einen Ausgang des Mikrofons (12) und einen Eingang des Lautsprechers (18) geschaltet ist, um das von dem Mikrofon (12) gelieferte Audiosignal zu verstärken, um dem Lautsprecher (18) ein elektrisches Signal (x(k)) bereitzustellen,
wobei eine Rückkopplungskomponente des von dem Lautsprecher (18) über den akustischen Rückkopplungspfad (20) mit einer vorbestimmten Zeitverzögerung an das Mikrofon (12) rückgekoppelten Audiosignals unterdrückt wird,
wobei das Verfahren aufweist:
Hinzuaddieren einer Zeitverzögerung, die der Zeitverzögerung des akustischen Rückkopplungspfads (20) entspricht, zu dem elektrischen Signal (x(k)), das von dem Verstärker (16) bereitgestellt wird;
Liefern des elektrischen Signals (x(k-τ)), dem die Zeitverzögerung hinzuaddiert wurde, an mehrere adaptive Filter (24(1), 24(2), 24(m)), die parallel zueinander geschaltet sind,
Filtern des elektrischen Signals (x(k-τ)), dem die Zeitverzögerung hinzuaddiert wurde, mit einem Filterkoeffizienten, der mit einem Aktualisierungsintervall periodisch aktualisiert wird, wobei das Aktualisierungsintervall eines jeden adaptiven Filters (24(1), 24(2), 24(m)) so gesetzt ist, dass es von einem ersten (24(1)) der adaptiven Filter (24(1), 24(2), 24(m)) zum letzten (24(m)) der adaptiven Filter (24(1), 24(2), 24(m)) nacheinander abnimmt;
Liefern eines Ausgangssignals (d₁(k), d₁(k), d₁(k)) von dem entsprechenden adaptiven Filter (24(1), 24(2), 24(m)) an mehrere Addiererabschnitte (14(1), 14(2), 14(m)), die in Entsprechung zu den mehreren adaptiven Filtern (24(1), 24(2), 24(m)) angeordnet sind und von einem ersten (14(1)) der Addiererabschnitte (14(1), 14(2), 14(m)) zu einem letzten der Addiererabschnitte (14(1), 14(2), 14(m)) in Reihe zwischen dem Mikrofon (12) und dem Verstärker (16) angeordnet sind,
Bereitstellen eines Ausgangssignals (e₂(k)) des ersten Addiererabschnitts (14(1)) durch Abziehen des Ausgangssignals (d₁(k)) des ersten adaptiven Filters (24(1)) von dem Ausgangssignal (y(k)) vom Mikrofon (12),
Bereitstellen eines Ausgangssignals (d₂(k), dₘ(k)) der anderen Addiererabschnitte (14(2), 14(m)) durch Abziehen des Ausgangssignals (d₂(k), dₘ(k)) des entsprechenden adaptiven Filters (24(2), 24(m) von einem Ausgangssignal (e₁(k), e₂(k)), das von einem entsprechenden Vorhergehenden (14(1), 14(2)), der Addiererabschnitte (14(1), 14(2), 14(m)) geliefert wird, um dadurch ein Ausgangssignal (e₂(k), eₘ(k)) bereitzustellen,
wobei das Ausgangssignal (e₁(k), e₂(k), eₘ(k)) von dem jeweiligen Addiererabschnitt (14(1), 14(2), 14(m)) in das entsprechende adaptive Filter (24(1), 24(2), 24(m)) eingegeben wird und
wobei der Filterkoeffizient eines jeden adaptiven Filters (24(1), 24(2), 24(m)) von jedem adaptiven Filter (24(1), 24(2), 24(m)) aktualisiert wird, um so eine Transferfunktion (H(z)) des akustischen Rückkopplungspfads (20) auf der Grundlage der Ausgangssignale (e₁(k), e₂(k), eₘ(k)) des entsprechenden Addiererabschnitts (14(1), 14(2), 14(m)) und des elektrischen Signals (x(k-τ)), zu dem die Zeitverzögerung hinzuaddiert wurde, zu simulieren,
**dadurch gekennzeichnet, dass** das Ausgangssignal (eₘ(k)) aus dem mindestens einen (14(m)) der Addiererabschnitte (14(1), 14(2), 14(m)) durch den Verstärker (16) in den Lautsprecher (18) eingegeben wird und als das elektrische Signal (x(k)) der Hinzuaddierung der Zeitverzögerung unterzogen wird.

13. Verfahren gemäß Anspruch 12, wobei das Ausgangssignal (d₁(k), d₂(k)) eines adaptiven Filters (24(1), 24(2)) mit dem elektrischen Signal (x(k-τ)), zu dem die Zeitverzögerung hinzuaddiert wurde, zur Eingabe in ein anderes adaptives Filter (24(2), 24(m)), das auf das eine adaptive Filter (14(1), 24(2)) folgt, gemischt wird.

14. Verfahren gemäß Anspruch 12, wobei der Filterkoeffizient eines adaptiven Filters (24(2), 24(m)) auf einen Anfangswert rückgesetzt wird, wenn der Filterkoeffizient eines anderen adaptiven Filters (24(1), 24(2)), das dem einen adaptiven Filter (24(2), 24(m)) vorausgeht, aktualisiert wird.

15. Verfahren gemäß Anspruch 14, wobei ein neuer Wert des Filterkoeffizienten des anderen adaptiven Filters (24(1), 24(2)) zur Aktualisierung des Filterkoeffizienten des anderen adaptiven Filters (24(1), 24(2)) mit Bezug auf den Filterkoeffizienten des einen adaptiven Filters (24(2), 24(m)) geschätzt wird, bevor der Filterkoeffizient des einen adaptiven Filters (24(2), (24(m)) rückgesetzt wird.

## Revendications

1. Suppresseur adaptatif de sifflement
le suppresseur adaptatif de sifflement étant adapté pour être utilisé dans un système de renforcement sonore, lequel système comprend
un microphone (12) installé dans un espace donné afin de recueillir un signal audio en provenance de celui-ci,
un haut-parleur (18) installé dans l'espace de sorte qu'un chemin de rétroaction acoustique (20) est formé entre le haut-parleur (18) et le microphone (12), et
un amplificateur (16) connecté entre une sortie du microphone (12) et une entrée du haut-parleur (18) afin d'amplifier le signal audio délivré depuis le microphone (12) afin de fournir un signal électrique (x(k)) au haut-parleur (18),
dans lequel le suppresseur adaptatif de sifflement est adapté pour supprimer une composante de rétroaction du signal audio renvoyé depuis le haut-parleur (18) au microphone (12) via le chemin de rétroaction acoustique (20) avec un retard de temps donné,
le suppresseur adaptatif de sifflement comprenant :
une section à retard (22) qui est adaptée pour ajouter un retard de temps correspondant au retard de temps du chemin de rétroaction acoustique (20) au signal électrique (x(k)) qui est fourni par l'amplificateur (16) afin de fournir ainsi en sortie le signal électrique auquel le retard de temps a été sommé en tant que signal de sortie (x(k-τ)) ;
un premier filtre adaptatif (24(1)) qui a une entrée destinée à recevoir le signal de sortie (x(k-T)) délivré depuis la section à retard (22) et qui est adapté pour filtrer le signal de sortie (x(k-τ)) de la section à retard (22) grâce à un premier coefficient de filtre, qui est périodiquement mis à jour à un intervalle de mise à jour ;
un second filtre adaptatif (24(2)) qui a une entrée destinée à recevoir le signal de sortie (x(k-τ)) délivré depuis la section à retard (22) et qui est adapté pour filtrer le signal de sortie (x(k-τ)) de la section à retard (22) grâce à un second coefficient de filtre, qui est périodiquement mis à jour à un autre intervalle de mise à jour établi pour être plus court que l'intervalle de mise à jour du premier coefficient de filtre ;
une première section de sommateur (14(1)) qui a une entrée destinée à recevoir un signal de sortie (d₁(k)) délivré depuis le premier filtre adaptatif (24(1)), et qui est adaptée pour soustraire le signal de sortie (d₁(k)) du premier filtre adaptatif (24(1)) du signal audio (y(k)) délivré depuis le microphone (12) afin de fournir ainsi un signal de sortie (e₁(k)) comme résultat de la soustraction ; et
une seconde section de sommateur (14(2)) qui a une entrée destinée à recevoir un signal de sortie (d₂(k)) délivré depuis le second filtre adaptatif (24(2)), et qui est adaptée pour soustraire le signal de sortie (d₂(k)) du second filtre adaptatif (24(2)) du signal de sortie (e₁(k)) de la première section de sommateur (14(1)) afin de fournir ainsi un signal de sortie (e₂(k)) comme résultat de la soustraction,
dans lequel le suppresseur de sifflement est adapté pour permettre au signal de sortie (e₁(k)) provenant de la première section de sommateur (14(1)) d'être fourni en entrée dans le premier filtre adaptatif (24(1)), et au signal de sortie (e₂(k)) provenant de la seconde section de sommateur (14(2)) d'être fourni en entrée dans le second filtre adaptatif (24(2)),
et
dans lequel le premier filtre adaptatif (24(1)) est adapté pour mettre à jour le premier coefficient de filtre de façon à simuler une fonction de transfert (H(z)) du chemin de rétroaction acoustique (20) basé sur les signaux de sortie (e₁(k), (x (k-τ)) de la première section de sommateur (14(1)) et de la section à retard (22), et le second filtre adaptatif (24(2)) est adapté pour mettre à jour le second coefficient de filtre de façon à simuler la fonction de transfert (H(z)) du chemin de rétroaction acoustique (20) basé sur les signaux de sortie (e₂(k), (x(k-τ)) de la seconde section de sommateur (14(2)) et de la section à retard (22)
**caractérisé en ce que** le suppresseur de sifflement est en outre adapté pour permettre au signal de sortie (e₂(k)) provenant de la seconde section de sommateur (14(2)) d'être fourni en entrée via l'amplificateur (16) au haut-parleur (18) et à la section à retard (22) en tant que signal 1 électrique (x(k)).

2. Suppresseur adaptatif de sifflement selon la revendication 1, comprenant en outre une section de mélangeur adaptée pour mélanger le signal de sortie (d₁(k)) du premier filtre adaptatif (24(1)) au signal de sortie (x(k-τ)) de la section à retard (22) devant être fourni en entrée dans le second filtre adaptatif (24(2)).

3. Suppresseur adaptatif de sifflement selon la revendication 2, dans lequel le second filtre adaptatif (24(2)) est adapté pour réinitialiser le second coefficient de filtre à une valeur initiale lorsque le premier filtre adaptatif (24(1)) met à jour le premier coefficient de filtre.

4. Suppresseur adaptatif de sifflement selon la revendication 3, dans lequel le premier filtre adaptatif (24(1)) est adapté pour estimer une nouvelle valeur du premier coefficient de filtre afin de mettre à jour le premier coefficient de filtre en référence au second coefficient de filtre du second filtre adaptatif (24(2)) avant que le second filtre adaptatif (24(2)) réinitialise le second coefficient de filtre.

5. Suppresseur adaptatif de sifflement selon la revendication 1, dans lequel le premier filtre adaptatif (24(1)) a un premier nombre de prises destinées à filtrer le signal de sortie (x(k-T)) de la section à retard, et le second filtre adaptatif (24(2)) a un second nombre de prises destinées à filtrer le signal de sortie de la section à retard (x(k-τ)), le premier nombre étant établi pour être plus grand que le second nombre.

6. Suppresseur adaptatif de sifflement selon la revendication 5, dans lequel le premier filtre adaptatif (24(1)) est adapté pour utiliser un algorithme de Transformée de Fourier à Court Terme et Spectre Croisé (algorithme TFCT-SC) afin de mettre à jour le premier coefficient de filtre.

7. Suppresseur adaptatif de sifflement selon la revendication 5, dans lequel le second filtre adaptatif (24(2)) est adapté pour utiliser un algorithme des moindres carrés moyens (algorithme LMS) ou un algorithme des Moindres Carrés Récursifs (algorithme RLS) afin de mettre à jour le second coefficient de filtre.

8. Suppresseur adaptatif de sifflement
le suppresseur adaptatif de sifflement étant adapté pour être utilisé dans un système de renforcement sonore, lequel système comprend
un microphone (12) installé dans un espace donné afin de recueillir un signal audio en provenance de celui-ci,
un haut-parleur (18) installé dans l'espace de sorte qu'un chemin de rétroaction acoustique (20) est formé entre le haut-parleur (18) et le microphone (12), et
un amplificateur (16) connecté entre une sortie du microphone (12) et une entrée du haut-parleur (18) afin d'amplifier le signal audio délivré depuis le microphone (12) afin de fournir un signal électrique au haut-parleur (18),
dans lequel le suppresseur adaptatif de sifflement est adapté pour supprimer une composante de rétroaction du signal audio renvoyé depuis le haut-parleur (18) au microphone (12) via le chemin de rétroaction acoustique (20) avec un retard de temps donné,
le suppresseur adaptatif de sifflement comprenant :
une section à retard (22) qui est adaptée pour sommer un retard de temps correspondant au retard de temps du chemin de rétroaction acoustique (20) au signal électrique (x(k)) qui est fourni par l'amplificateur (16) afin de fournir ainsi en sortie le signal électrique auquel le retard de temps a été sommé en tant que signal de sortie (x(k-τ)) ;
au moins trois filtres adaptatifs (24(1), 24(2), 24(m)) qui sont agencés parallèlement les uns aux autres, chaque filtre adaptatif (24(1), 24(2), 24(m)) ayant une entrée destinée à recevoir le signal de sortie (x(k-τ)) délivré depuis la section à retard (22) et étant adapté pour filtrer le signal de sortie de la section à retard (22) grâce à un coefficient de filtre, qui est périodiquement mis à jour à un intervalle de mise à jour, l'intervalle de mise à jour de chaque filtre adaptatif (24(1), 24(2), 24(m)) étant réglé pour diminuer successivement d'un premier des filtres adaptatifs (24(1), 24(2), 24(m)) à un dernier des filtres adaptatifs (24(1), 24(2), 24(m)) ; et
une pluralité de sections de sommateur (14(1), 14(2), 14(m)) qui sont agencées en correspondance aux filtres adaptatifs (24(1), 24(2), 24(m)) et sont connectées en série d'une première (14(1)) des sections de sommateur (14(1), 14(2), 14(m)) à une dernière (14(m)) des sections de sommateur (14(1), 14(2), 14(m)) entre le microphone (12) e t l'amplificateur (16), chaque section de sommateur (14(1), 14(2), 14(m)) ayant une entrée destinée à recevoir un signal de sortie (d₁(k), d₂(k), dₘ(k)) délivré depuis le filtre adaptatif correspondant (24(1), 24(2), 24(m)),
dans lequel la première (14(1)) des sections de sommateur (14(1), 14(2), 14(m)) est adaptée pour soustraire le signal de sortie (d₁(k)) du premier filtre adaptatif (24(1)) du signal audio (y(k)) délivré depuis le microphone (12) afin de fournir ainsi un signal de sortie (e₁(k)) comme résultat de la soustraction et
les autres sections de sommateur (14(2), 14(m)) sont adaptées pour soustraire le signal de sortie (d₂(k), (dₘ(k)) du filtre adaptatif correspondant (24(2), 24(m)) d'un signal d e sortie (e₁(k), e₂(k)) délivré depuis une section précédente des sections de sommateur (14(1), 14(2), 14(m)) afin de fournir ainsi un signal de sortie (d₂(k), dₘ(k)) comme résultat de la soustraction,
dans lequel le suppresseur de sifflement est adapté pour permettre au signal de sortie (e₁(k), e₂(k), eₘ(k)) provenant de chaque section de sommateur (14(1), 14(2), 14(m)) d'être fourni en entrée dans le filtre adaptatif correspondant (24(1), 24(2), 24(m)), et
dans lequel chaque filtre adaptatif (24(1), 24(2), 24(m)) est adapté pour mettre à jour chaque coefficient de filtre respectif de façon à simuler une fonction de transfert (H(z)) du chemin de rétroaction acoustique (20) basé sur les signaux de sortie (e₁(k), e₂(k), eₘ(k)) provenant de la section de sommateur correspondante (14(1), 14(2), 14(m)) et la section à retard (22)
**caractérisé en ce que** le suppresseur de sifflement est en outre adapté pour permettre au signal de sortie (eₘ(k)) provenant de la dernière (14(m)) des sections de sommateur (14(1), 14(2), 14(m)) d'être fourni en entrée via l'amplificateur (16) au haut-parleur (18) et à la section à retard (22) en tant que signal électrique (x(k)).

9. Suppresseur adaptatif de sifflement selon la revendication 8, comprenant en outre une section de mélangeur qui est adaptée pour mélanger le signal de sortie (d₁(k), d₂(k)) d'un filtre adaptatif (24(1), 24(2)) au signal de sortie (x(k-₁)) de la section à retard (22) devant être fourni en entrée dans un autre filtre adaptatif (24(2), 24(m)) succédant audit un filtre adaptatif (24(1), 24(2)).

10. Suppresseur adaptatif de sifflement selon la revendication 8 , dans lequel un filtre adaptatif (24(2), 24(m)) est adapté pour réinitialiser son coefficient de filtre à une valeur initiale lorsqu'un autre filtre adaptatif (24(1), 24(2)) précédant ledit un filtre adaptatif (24(2), 24(m)) met à jour son coefficient de filtre.

11. Suppresseur adaptatif de sifflement selon la revendication 10, dans lequel ledit autre filtre adaptatif (24(1), 24(2)) est adapté pour estimer une nouvelle valeur du coefficient de filtre dudit autre filtre adaptatif (24(1), 24(2)) afin de mettre à jour le coefficient de filtre dudit autre filtre adaptatif (24(1), 24(2)) en référence au coefficient de filtre dudit un filtre adaptatif (24(2), 24(m)) avant que ledit un filtre adaptatif (24(2), 24(m)) réinitialise le coefficient de filtre dudit un filtre adaptatif (24(2), 24(m)).

12. Procédé destiné à supprimer de façon adaptative le sifflement dans un système de renforcement sonore, lequel système comprend
un microphone (12) installé dans un espace donné afin de recueillir un signal audio en provenance de celui-ci,
un haut-parleur (18) installé dans l'espace de sorte qu'un chemin de rétroaction acoustique (20) est formé entre le haut-parleur (18) et le microphone (12), et
un amplificateur (16) connecté entre une sortie du microphone (12) et une entrée du haut-parleur (18) afin d'amplifier le signal audio (y(k)) délivré depuis le microphone (12) afin de fournir un signal électrique (x(k)) au haut-parleur (18),
dans lequel une composante de rétroaction du signal audio renvoyé depuis le haut-parleur (18) au microphone (12) via le chemin de rétroaction acoustique (20) avec un retard de temps donné est supprimée,
dans lequel ledit procédé comprend
la sommation d'un retard de temps correspondant au retard de temps du chemin de rétroaction acoustique (20) au signal électrique (x(k)) qui est fourni par l'amplificateur (16) ;
la délivrance du signal électrique (x(k-τ)) auquel le retard de temps a été sommé à une pluralité de filtres adaptatifs (24(1), 24(2), 24(m)) qui sont agencés parallèlement les uns aux autres,
le filtrage du signal électrique (x(k-τ)) auquel le retard de temps a été sommé grâce à un coefficient de filtre, qui est périodiquement mis à jour à un intervalle de mise à jour, l'intervalle de mise à jour de chaque filtre adaptatif (24(1), 24(2), 24(m)) étant établi pour diminuer successivement d'un premier (24(1)) des filtres adaptatifs (24(1), 24(2), 24(m)) à un dernier (24(m)) des filtres adaptatifs (24(1), 24(2), 24(m)) ;
la délivrance à une pluralité de sections de sommateur (14(1), 14(2), 14(m)) qui sont agencées en correspondance à la pluralité de filtres adaptatifs (24(1), 24(2), 24(m)) et sont connectées en série d'une première (14(1)) des sections de sommateur (14(1), 14(2), 14(m)) à une dernière des sections de sommateur (14(1), 14(2), 14(m)) entre le microphone (12) et l'amplificateur (16), d'un signal de sortie (d₁(k), d₁(k), d₁(k)) provenant du filtre adaptatif correspondant (24(1), 24(2), 24(m)),
la fourniture d'un signal de sortie (e₂(k)) de la première section de sommateur (14(1)) en soustrayant le signal de sortie (d₁(k)) du premier filtre adaptatif (24(1)) du signal de sortie (y(k)) du microphone (12),
la fourniture d'un signal de sortie (d₂(k), dₘ(k)) des autres sections de sommateur (14(2), 14(m)) en soustrayant le signal de sortie (d₂(k), dₘ(k)) du filtre adaptatif correspondant (24(2), 24(m)) d'un signal de sortie (e₁(k), e₂(k)) délivré depuis une section précédente respective (14(1), 14(2)) des sections de sommateur (14(1), 14(2), 14(m)) afin de fournir ainsi un signal de sortie (e₂(k), (eₘ(k)),
dans lequel le signal de sortie (e₁(k), e₂(k), eₘ(k)) provenant de chaque section de sommateur (14(1), 14(2), 14(m)) est fourni en entrée dans le filtre adaptatif correspondant (24(1), 24(2), 24(m)), et
dans lequel le coefficient de filtre de chaque filtre adaptatif (24(1), 24(2), 24(m)) est mis à jour par chaque filtre adaptatif (24(1), 24(2), 24(m)) de façon à simuler une fonction de transfert (H(z)) du chemin de rétroaction acoustique (20) basé sur les signaux de sortie (e₁(k), e₂(k), eₘ(k)) de la section de sommateur correspondante (14(1), 14(2), 14(m)) et le signal électrique (x(k-τ)) auquel le retard de temps a été sommé,
**caractérisé en ce que** le signal de sortie (eₘ(k)) provenant de la dernière (14(m)) des sections de sommateur (14(1), 14(2), 14(m)) est fourni en entrée via l'amplificateur (16) au haut-parleur (18) et soumis, en tant que signal électrique (x(k)), à ladite sommation du retard de temps.

13. Procédé selon la revendication 12, dans lequel le signal de sortie (d₁(k), d₂(k)) d'un filtre adaptatif (24(1), 24(2)) est mélangé audit signal électrique (x(k-τ)) auquel le retard de temps a été sommé devant être fourni en entrée dans un autre filtre adaptatif (24(2), 24(m)) succédant audit un filtre adaptatif (24(1), 24(2)).

14. Procédé selon la revendication 12, dans lequel le coefficient de filtre d'un filtre adaptatif (24(2), 24(m)) est réinitialisé à une valeur initiale lorsque le coefficient de filtre d'un autre filtre adaptatif (24(1), 24(2)) précédant ledit un filtre adaptatif (24(2), 24(m)) est mis à jour.

15. Procédé selon la revendication 14, dans lequel une nouvelle valeur du coefficient de filtre dudit autre filtre adaptatif (24(1), 24(2)) est estimée afin de mettre à jour le coefficient de filtre dudit autre filtre adaptatif (24(1), 24(2)) en référence au coefficient de filtre dudit un filtre adaptatif (24(2), 24(m)) avant que le coefficient de filtre dudit un filtre adaptatif (24(2), 24(m)) soit réinitialisé.
